# EUROPÄISCHE PATENTSCHRIFT

(11) **EP 2 146 025 B1**
(45) Veröffentlichungstag und Bekanntmachung des Hinweises auf die Patenterteilung: **18.12.2013**
(21) Anmeldenummer: 09013836.3
(22) Anmeldetag: 25.03.2008
(51) Int. Cl.: E04F 15/02

(54) **Verfahren zur Herstellung eines Paneels, insbesondere eines Bodenpaneels**
Method for producing a panel, in particular a floor panel
Procédé de fabrication d'un panneau, notamment d'un panneau de sol

(30) Priorität: 26.03.2007 DE 102007015048
(43) Veröffentlichungstag der Anmeldung: 20.01.2010
(62) Teilanmeldung aus: 08734746.4
(73) Patentinhaber: Kronotec AG, 6006 Luzern (CH)
(72) Erfinder:
(74) Vertreter: Rehmann, Thorsten

(56) Entgegenhaltungen:
- WO-A1-2007/020088

## Beschreibung

Die Erfindung betrifft ein Verfahren zur Herstellung eines Paneels, insbesondere eines Bodenpaneels, mit einem Kern aus Holzwerkstoff oder Holzwerkstoff-Kunststoff-Gemisch, einer Oberseite und einer Unterseite, das an mindestens zwei sich gegenüberliegenden ersten und zweiten Seitenkanten eine solche, zueinander korrespondierende Profilierung aufweist, dass zwei identisch ausgebildete Paneele durch eine im Wesentlichen vertikale Fügebewegung in horizontaler und vertikaler Richtung miteinander verbindbar und verriegelbar sind, wobei die Verriegelung in vertikaler Richtung durch mindestens ein in horizontaler Richtung bewegbares, einstückig aus dem Kern an der zweiten Seitenkanten herausgebildetes Federelement bewirkbar ist, das bei der Fügebewegung hinter einer sich im Wesentlichen in horizontaler Richtung erstreckenden Verriegelungskante einschnappt.

Ein solches Paneel ist beispielsweise aus der DE 201 12 474 U1 oder EP 1 350 904 A2 bekannt.

Aus der EP 1 650 375 A1 ist ein Paneel bekannt, das nicht einstückig aus dem Kern herausgebildet ist. Die bei diesem Paneel realisierte Art der Verriegelung ist bevorzugt an der Querseite von Bodenpaneelen vorgesehen. Sie kann aber auch an der Längsseite bzw. sowohl an der Längsseite als auch an der Querseite vorgesehen sein. Das Federelement besteht aus Kunststoff und ist in eine horizontal verlaufende Nut an einer der Seitenkanten eingesetzt und an seiner Oberseite abgeschrägt. Ähnlich einem Türschnapper wird durch die Schräge das Federelement von dem neu anzusetzenden Paneel nach innen in die Nut hineingedrückt, wenn dieses mit seiner Unterseite auf die Abschrägung auftritt und weiter abgesenkt wird. Wenn das neu anzulegende Paneel vollständig auf den Unterboden abgesenkt ist, schnappt das Federelement in eine horizontal in der gegenüberliegenden Seitenkante eingebrachte Nut ein und verriegelt die beiden Paneele in vertikaler Richtung. Für die Fertigung dieses Federelementes sind spezielle Spritzgusswerkzeuge notwendig, so dass die Herstellung relativ teuer ist. Des Weiteren muss ein hochwertiger Kunststoff verwendet werden, um ausreichende Festigkeitswerte zur Verfügung zu stellen, was das Federelement weiter verteuert. Werden Kunststoffe mit zu geringen Festigkeitswerten verwendet, führt dies zu relativ großen Abmaßen der Federelemente, da nur dadurch gewährleistet ist, dass entsprechende Kräfte erzeugt bzw. übertragen werden können.

Dadurch, dass das Verriegelungselement als separates Bauteil ausgeführt ist, ergeben sich zusätzliche Aufwendungen. Die Herstellung des Verriegelungselementes erfolgt technologisch bedingt räumlich getrennt von den Paneelen, so dass eine Einbindung in den kontinuierlichen Herstellungsprozess, insbesondere für Fußbodenpaneele, eher nicht möglich ist. Durch die unterschiedlichen Materialien, Holzwerkstoff auf der einen Seite und Kunststoff auf der anderen Seite, ist die Angleichung von Fertigungstoleranzen aus zwei separaten Herstellungsprozessen aufwändig und kostenintensiv. Da die Verriegelung in vertikaler Richtung bei fehlendem Verriegelungselement unwirksam wäre, muss dieses zudem gegen Herausfallen aus der in die Seitenkante eingebrachten Nut im weiteren Herstellungsprozess und beim Transport gesichert werden. Auch diese Sicherung ist aufwändig. Alternativ dazu könnte das Verriegelungselement dem Verbraucher separat zur Verfügung gestellt werden.

Immer häufiger werden die in Rede stehenden Bodenpaneele von Heimwerkern verlegt, so dass grundsätzlich die Möglichkeit aufgrund fehlender Erfahrung besteht, dass die benötigte Anzahl der Verriegelungselemente zunächst falsch eingeschätzt wird und diese nicht in ausreichender Menge beschafft werden, um einen Raum vollständig auslegen zu können. Außerdem ist nicht auszuschließen, dass der Heimwerker beim Einsetzen des Federelementes Fehler begeht, was dazu führt, dass die Verriegelung nicht exakt möglich ist und sich der Verbund im Laufe der Zeit löst, was dann fälschlich vom Verbraucher der vom Hersteller gelieferten Qualität zugeschrieben wird.

Aus der DE 102 24 540 A1 sind Paneele bekannt, die an gegenüberliegenden Seitenkanten so profiliert sind, dass sich hakenförmige Verbindungselemente zur Verriegelung in horizontaler Richtung ausbilden. Zur Verriegelung in vertikaler Richtung sind an den Verbindungselementen voneinander horizontal und vertikal beabstandete Formschlusselemente und hierzu korrespondierende Hinterschnitte mit jeweils einer horizontal ausgerichteten Verriegelungsfläche vorgesehen. Die Querausdehnung derartiger horizontal ausgerichteter Verriegelungsflächen beträgt etwa 0,05 bis 1,0 mm. Damit das Zusammenfügen zweier Paneele überhaupt möglich bleibt, muss die Dimensionierung so klein sein. Dadurch stellt sich aber zwangsläufig ein, dass nur geringe, vertikal gerichtete Kräfte aufgenommen werden können, so dass mit äußerst geringen Toleranzen gefertigt werden muss, um sicherzustellen, dass nicht bereits bei leichten Bodenunebenheiten und/oder weichen Untergründen die Verbindung bei normaler Belastung aufspringt.

Von dieser Problemstellung ausgehend soll ein Verfahren zur Herstellung des eingangs beschriebenen Paneels angegeben werden.

Zur Problemlösung zeichnet sich das Verfahren dadurch aus, dass das mindestens eine Federelement mittels quer zur Verarbeitungsrichtung verschiebbarer Werkzeuge in Richtung der Oberseite und in Richtung der ihm gegenüberliegenden ersten Seitenkante gegenüber dem Kern frei gelegt ist und in Längsrichtung der zweiten Seitenkante an mindestens einem seiner beiden Enden mit dem Kern verbunden bleibt.

Durch diese Ausgestaltung wird die Produktion drastisch vereinfacht. Das Abgleichen der Toleranzen unterschiedlicher Bauteile entfällt. Fertigungszeiten und -kosten werden reduziert, weil es nicht notwendig ist, unterschiedliche Bauteile zusammenzuführen und zusammenzuhalten. Beim Endverbraucher ist außerdem sichergestellt, dass bei einem so hergestellten Paneel keine Bauteile fehlen und nicht weiter gearbeitet werden kann.

Erfindungsgemäß ist das mindestens eine Federelement in Richtung der Oberseite und in Längsrichtung der gegenüberliegenden Seitenkante gegenüber dem Kern frei und in Längsrichtung seiner Seitenkante an mindestens einem, insbesondere vorzugsweise an seinen beiden Enden mit dem Kern verbunden. Durch die Größe der wirksamen Verbindung des Federelementes mit dem Kern kann die Federelastizität eingestellt werden.

Die Freilegung des Federelementes erfolgt vorzugsweise mittels eines horizontalen und eines vertikalen Schlitzes. Durch die Breite der Schlitze wird nicht nur die Stärke der Anbindung des Federelementes an das Kernmaterial bestimmt, sondern durch die Wahl der Breite des vertikalen Schlitzes kann auch ein Anschlag in horizontaler Richtung für das Federelement geschaffen werden, so dass dieses gegen Überdehnung sicher geschützt wird.

Wenn über die Länge der Seitenkante eine Mehrzahl von zueinander beabstandeten Federelementen vorgesehen ist, wird die Stabilität der Verbindung erhöht, weil der freie Federweg in Längsrichtung des Federelementes begrenzt wird. Der Abstand zwischen den einzelnen Federelementen kann mehr oder weniger groß gewählt werden. Je geringer der Abstand ist, umso größer ist natürlich die wirksame Fläche, mit der verriegelt wird, so dass die übertragbaren Kräfte in vertikaler Richtung entsprechend hoch sind.

Die horizontale Verriegelung erfolgt bevorzugt mittels zueinander korrespondierender Hakenelemente, wobei das Hakenelement an der die Verriegelungskante aufweisenden Seitenkante durch einen in Richtung der Oberseite hervorspringenden Absatz und das Hakenelement an der das Federelement aufweisenden Seitenkante durch einen in Richtung der Unterseite gerichteten Absatz ausgebildet wird.

Wenn die äußere Kante des Federelementes in einem Winkel zur Oberseite geneigt verläuft, wird die Fügebewegung erleichtert, weil das Federelement mit zunehmender Bewegung tiefer in Richtung des Paneelkerns einfedert.

Die im Wesentlichen horizontal verlaufende Verriegelungskante ist vorzugsweise die Seitenwandung einer in die Seitenkante eingebrachten Nut.

Die im Wesentlichen horizontal verlaufende Verriegelungskante kann aber auch durch einen nach außen ragenden Vorsprung an dem hervorspringenden Absatz gebildet werden. Für diesen Fall ist es dann vorteilhaft, wenn das Federelement an der Unterseite des Paneels endet.

Um eine möglichst sichere Verriegelung in vertikaler Richtung zu erzielen, kann der nach unten ragende Absatz eine zumindest teilweise ebene Kopffläche aufweisen, die in derselben horizontalen Ebene endet wie eine an der gegenüberliegenden Seitenkante ausgebildete Auflagefläche, so dass sich zwei miteinander verbundene Paneele aufeinander abstützen können.

Wenn die Hakenelemente so ausgebildet sind, dass sich in der Verbindungsstelle zweier miteinander verbundener Paneele eine Vorspannung einstellt, werden die Seitenkanten der Paneele im Bereich der Oberseite mit ihren vertikalen Flächen aneinandergepreßt, wodurch eine dichte Verbindung an der Plattenoberseite erzielt und Spaltbildung vermieden werden kann.

Mit Hilfe einer Zeichnung sollen nachfolgende Ausführungsbeispiele der Erfindung beschrieben werden.

Es zeigt:

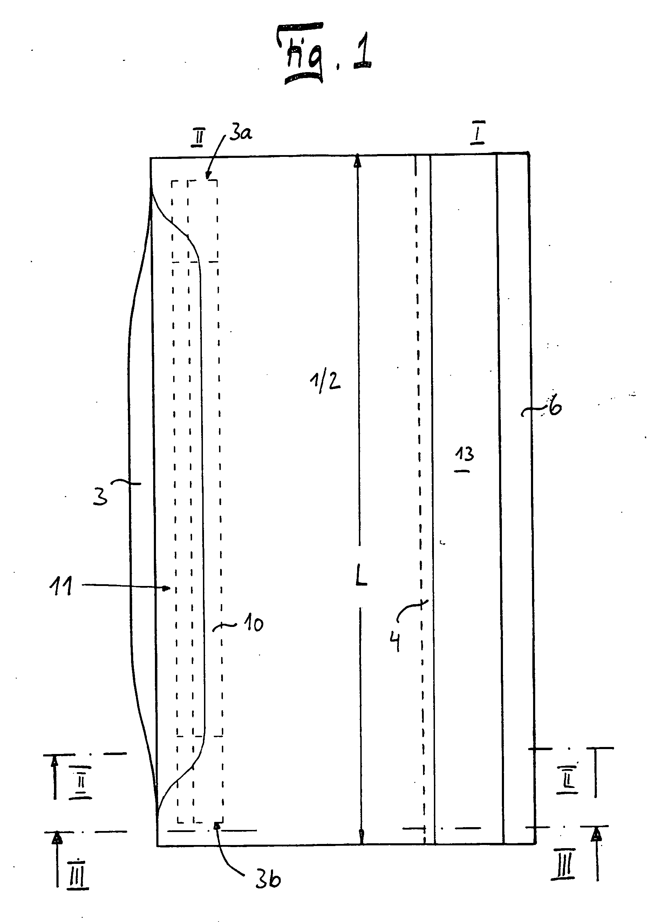

- Figur 1: die Draufsicht auf ein erstes Paneel;
- Figur 2: die Darstellung zweier miteinander verbundener Paneele im Teilschnitt analog zu der Schnittlinie II-II nach Figur 1;
- Figur 3: die Darstellung entsprechend Figur 2 analog zu der Schnittlinie III-III nach Figur 1;
- Figur 4: eine erste Variante des Paneels nach Figuren 2 und 3;
- Figur 5: eine zweite Variante des Paneels nach Figuren 2 und 3;
- Figur 6: die Seitenansicht zweier miteinander verbundener Paneele nach einem zweiten Ausführungsbeispiel;
- Figur 7: den Schnitt der miteinander verbundenen Paneele aus Figur 6;
- Figur 8: eine weitere Ausführungsform der Paneele;
- Figur 9: eine vierte Ausführungsform der Paneele;

Die Paneele 1, 2 sind identisch ausgebildet. Sie bestehen aus einem Kern 17 aus Holzwerkstoff oder einem Holzwerkstoff-Kunststoff-Gemisch. An ihren sich gegenüber liegenden Seitenkanten I, II, sind die Paneele 1, 2 profiliert, wobei die Seitenkante I von der Oberseite 18 und die Seitenkante II von der Unterseite 19 fräsend bearbeitet wurde. An der Seitenkante II ist das Federelement 3 ausgebildet, das durch Freifräsen des Kerns 17 erzeugt wurde, indem ein horizontaler Schlitz 11 und ein im Wesentlichen vertikal verlaufender Schlitz 10 eingefräst wurden. Die Seitenkanten I, II haben die Länge L. In Längsrichtung der Seitenkante II ist das Federelement 3 an seinen Enden 3a, 3b mit dem Kernmaterial verbunden. Die Freilegung des Federelementes 3 vom Kern 17 erfolgt ausschließlich durch die Schlitze 10, 11. Die äußere Kante 3c des Federelementes 3 ist gegenüber der Oberseite 18 des Paneels 2 im Winkel a geneigt. Die vertikalen Flächen der Seitenkanten I, II sind so bearbeitet, dass sich im Bereich der Oberseite 18 Anlageflächen 15, 16 ausbilden.

An der dem Federelement 3 gegenüberliegenden Seitenkante I ist das Paneel 1 mit einer sich im Wesentlichen in horizontaler Richtung H erstreckenden Nut 9 versehen, deren obere Seitenwandung eine im Wesentlichen horizontal verlaufende Verriegelungskante 4 ausbildet. Wie in den Figuren dargestellt, verläuft der Nutgrund der Nut 9 parallel zur äußeren Kante 3c des Federelementes 3, was die Fertigung der Nut 9 erleichtert, er könnte aber auch strikt in vertikaler Richtung oder mit einem vom Winkel a abweichenden Winkel ausgeführt sein.

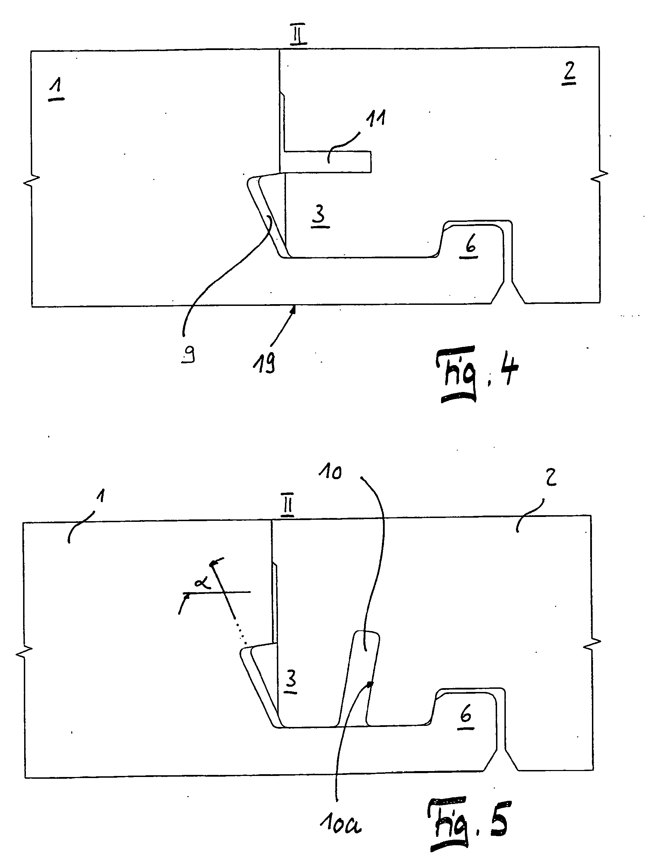

Die Verriegelung der beiden Paneele 1, 2 in horizontaler Richtung erfolgt über die durch eine Stufenprofilierung fräsend erzeugten Hakenelemente 20, 21 und in vertikaler Richtung über das Federelement 3 in Verbindung mit der Verriegelungskante 4 der Nut 9. Am sich nach unten erstreckenden Absatz 5 des Hakenelementes 21 ist eine zumindest teilweise plane Kopffläche 12 ausgebildet, die zusammenwirkt mit einer am Hakenelement 20 an der gegenüberliegenden Seitenkante I ausgebildeten Auflagefläche 13, die hinter dem Vorsprung 6 zurückragt. Die Kopffläche 12 und die Auflagefläche 13 enden in derselben horizontalen Ebene E, so dass sich die miteinander verbundenen Paneele 1, 2 aufeinander abstützen. Die Profilierung der Hakenelemente 20, 21 ist so gewählt, dass in der Verbindungsstelle eine Vorspannung erzeugt wird und die vertikalen Anlageflächen 15, 16 der Paneele 1, 2 aufeinander zugepreßt werden, so dass an der Oberseite 18 zweier miteinander verbundener Paneele 1, 2 kein sichtbarer Spalt entsteht. Um das Fügen der Paneele 1, 2 zu erleichtern, sind der nach oben ragende Absatz 6 des Hakenelementes 20 und der nach unten ragende Absatz 5 des Hakenelementes 21 an ihren Kanten gefast bzw. verrundet. Um die Fertigung zur Ausbildung des Federelementes 3 zu vereinfachen, können entweder der horizontal verlaufende Schlitz 11 (Figur 4) oder der im Wesentlichen vertikal verlaufende Schlitz 10 (Figur 5) durchgängig sein, also über die volle Länge L der Seitenkante II reichen.

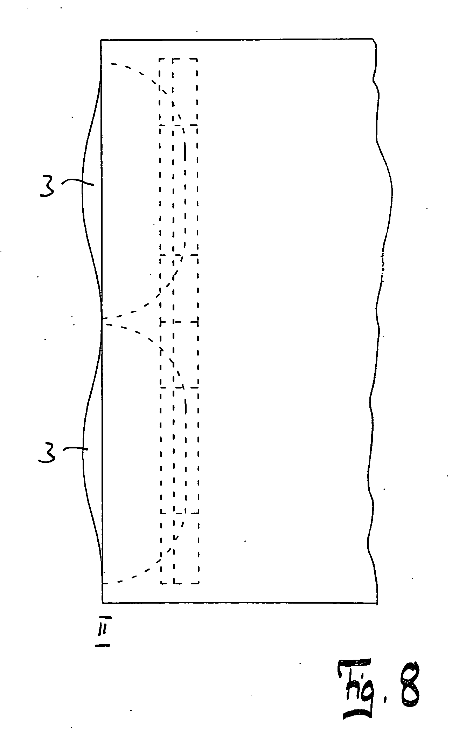

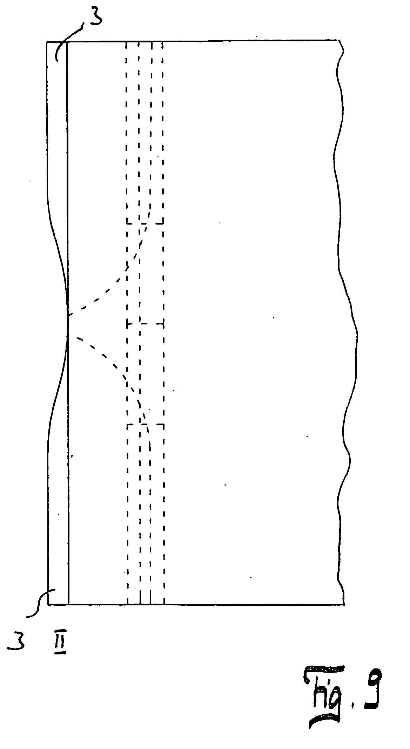

Das Paneel 2 wird mit dem bereits auf dem Unterboden liegenden Paneel 1 verbunden, in dem das Paneel 2 an der Seitenkante I des Paneels 1 angelegt und durch eine im Wesentlichen vertikale Fügeverbindung in Richtung des Unterbodens abgesenkt wird. Wenn das Federelement 3 mit seiner unteren Kante 3d an der Oberseite 18 des Paneels 1 anstößt, wird es bei der weiteren Fügebewegung infolge seiner im Winkel a verlaufenden äußeren Seitenkante 3c bei Berührung mit der Anlagefläche 15 in Richtung des Kerns 17 gedrückt, so dass es in horizontaler Richtung H ausweicht. Das Paneel 2 wird weiter nach unten abgesenkt. Gelangt das Federelement 3 in eine Lage gegenüber der Nut 9 wird es infolge der dem Material inhärenten Rückstellkräfte ausgefedert und schnappt dann in die Nut 9 ein, wo es mit seiner im Wesentlichen horizontal verlaufenden Oberseite 3e an der Verriegelungskante 4 anliegt. Gleichzeitig gelangen die Hakenelemente 20, 21 in Eingriff, bis die Kopffläche 12 sich auf der Auflagefläche 13 abstützt. Die Paneele 1, 2 sind dann miteinander verbunden und verriegelt. Die innere Wandung 10a des Schlitzes 10 dient als Begrenzung des Einfederweges für das Federelement 3, um zu verhindern, dass durch eine zu weite Eintauchbewegung die Verbindung des Federelementes 3 an seinen Enden 3a, 3b mit dem Kern 17 ausreißt. Die Fläche, also die Höhe und die Breite, mit der die Enden 3a, 3b mit dem Kern 17 verbunden sind, bestimmen die Federrate des Federelementes 3. Wie Figuren 8 und 9 zeigen, können mehrere Federelemente 3 über die Länge L der Seitenkante II ausgebildet werden. In den Figuren 8 und 9 sind zwei ausgebildete Federelemente 3 gezeigt. Es ist durchaus auch denkbar, die Federelemente 3 kürzer auszugestalten und fünf, sechs oder gar sieben oder mehr Federelemente 3 vorzusehen.

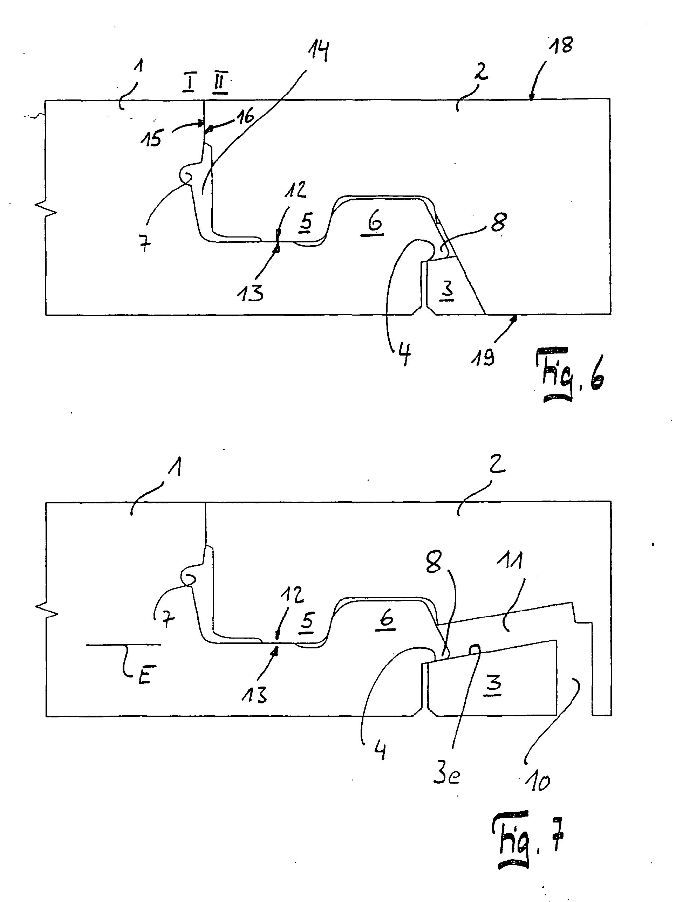

Bei dem in Figuren 6 und 7 gezeigten Ausführungsbeispiel ist das Federelement 3 an der Unterseite 19 der Paneele 1, 2 ausgebildet. Die Verriegelungskante 4 an der Seitenkante I wird durch einen Vorsprung 8 am Absatz 6 gebildet. Auch hier erfolgt die Freilegung des Federelementes 3 durch den im Wesentlichen in horizontaler Richtung H verlaufenden Schlitz 11 und den in vertikaler Richtung V verlaufenden Schlitz 10. Auch hier kann einer der Schlitze 10, 11 zur Vereinfachung des Fertigungsverfahrens über die volle Länge L der Seitenkante II reichen. Die vertikalen Flächen 15, 16 sind an den Seitenkanten I, II bei dieser Ausführungsform so bearbeitet, dass sich eine Staubtasche 14 ausbildet, wobei an der Seitenkante I eine in den Kern 17 hineinragende Hinterschneidung 7 vorgesehen ist.

Wenn der vertikale Schlitz 10 schmal genug ausgebildet ist, ist es möglich, das Federelement 3 nur an einem seiner Enden 3a oder 3b mit dem Kern verbunden zu halten. Dies ist in der Draufsicht nach Figur 9 angedeutet. Eine solche Ausgestaltung hat den Vorteil, dass sich das Federelement 3 auch in Richtung der Länge L der Seitenkante II ausdehnen kann. Das dann freie Ende 3a oder 3b stützt sich dann an der inneren Wandung 10a des Schlitzes 10 ab.

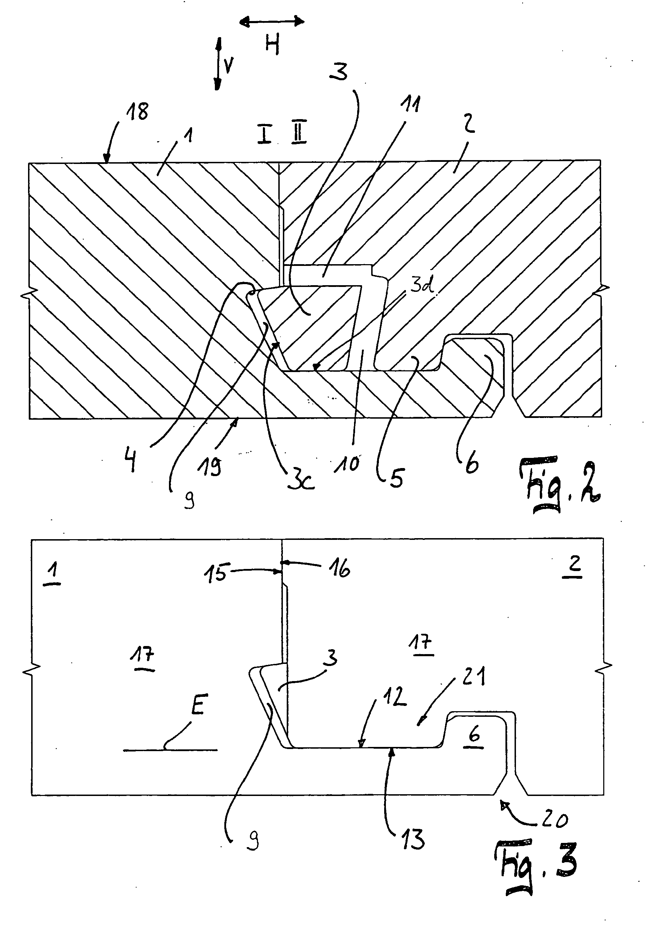

Das Herausarbeiten des Federelementes 3 erfolgt bei dem aus Figuren 2 und 3 ersichtlichen Paneel 1, 2 mittels quer zur Verarbeitungsrichtung verschiebbarer Werkzeuge. Als Werkzeuge können Fräs-, Laser- oder Wasserstrahlwerkzeuge oder auch stehende Klingen oder Räumnadeln verwendet werden. Bei den Ausführungsbeispielen nach Figuren 4 und 5 ist jeweils nur ein verschiebbares Werkzeug nötig, so dass die jeweils andere Freistellung mittels eines konventionellen starren Werkzeugs ausgeführt werden kann. Dabei verringert sich der nicht freigestellte Bereich, der das Federelement 3 mit dem Kern 17 einstückig verbindet. Dadurch lassen sich auch unterschiedich starke Verriegelungskräfte einstellen. Die Verriegelung ist bei allen Ausführungsbeispielen lösbar, indem die Paneele 1, 2 relativ zueinander entlang der Seitenkanten I, II verschoben werden oder indem ein nicht gezeigter Entriegelungsstift seitlich in die Verbindungsstelle eingeführt wird.

Die Paneele 1, 2 sind an ihrer Oberseite 18 üblicherweise mit einem Dekor versehen, das unmittelbar auf die Oberseite 18 aufgedruckt sein kann. Das Dekor wird üblicherweise durch eine Verschleißschutzschicht abgedeckt, in die eine zu dem Dekor korrespondierende Strukturierung eingeprägt sein kann.

Diese vorstehend beschriebene Art der Verriegelung wird bevorzugt an der Querseite von Paneelen 1, 2 vorgesehen, die an Ihrer Längsseite durch Einwinkeln und Herabschwenken auf den Unterboden miteinander verbunden werden können, wie dies in der DE 102 24 540 A1 beschrieben ist. Denkbar ist aber auch, diese Profilierung sowohl an den Längsseiten als auch an den Querseiten auszubilden, so dass die Paneele durch eine rein vertikale Fügebewegung an allen Seitenkanten miteinander verbunden und verriegelt werden können.

### Bezugszeichenliste:

- 1: Paneel
- 2: Paneel
- 3: Federelement
- 3a: Ende
- 3b: Ende
- 3c: äußere Kante
- 3d: untere Kante
- 3e: Oberseite
- 4: Verriegelungskante
- 5: Absatz
- 6: Absatz
- 8: Vorsprung
- 9: Nut
- 10: Schlitz
- 10a: innere Wandung
- 11: Schlitz
- 12: Kopffläche
- 13: Auflagefläche
- 14: Staubtasche
- 15: vertikale Fläche
- 16: vertikale Fläche
- 17: Kern
- 18: Oberseite
- 19: Unterseite
- 20: Hakenelement
- 21: Hakenelement
- E: Ebene
- H: horizontale Richtung
- L: Länge
- V: vertikale Richtung
- I: Seitenkante
- II: Seitenkante
- a: Winkel

## Patentansprüche

1. Verfahren zur Herstellung eines Paneels, insbesondere Bodenpaneels (1, 2), mit einem Kern aus Holzwerkstoff oder Holzwerkstoff-Kunststoff-Gemisch (17), einer Oberseite (18) und einer Unterseite (19), das an mindestens zwei sich gegenüberliegenden ersten und zweiten Seitenkanten (I, II) eine solche zueinander korrespondierende Profilierung aufweist, dass zwei identisch ausgebildete Paneele (1, 2) durch eine im Wesentlichen vertikale Fügebewegung in horizontaler (II) und vertikaler (V) Richtung miteinander verbindbar und verriegelbar sind, wobei die Verriegelung in vertikaler Richtung (V) durch zumindest ein in horizontaler Richtung (H) bewegbares, einstückig aus dem Kern (17) an der zweiten Seitenkante (II) herausgebildetes Federelement (3) bewirkbar ist, das bei der Fügebewegung hinter eine sich im Wesentlichen in horizontaler Richtung (H) erstreckende Verriegelungskante (4) einschnappt, indem das mindestens eine Federelement (3) mittels quer zur Verarbeitungsrichtung verschiebbarer Werkzeuge in Richtung der Oberseite (18) und in Richtung der ihm gegenüberliegenden ersten Seitenkante (I) gegenüber dem Kern (17) frei gelegt wird und dabei in Längsrichtung der zweiten Seitenkante (II) an mindestens einem seiner beiden Enden (3a, 3b) mit dem Kern (17) verbunden bleibt.

2. Verfahren nach Anspruch 1, **dadurch gekennzeichnet, dass** als Werkzeuge Fräs-, Laser- oder Wasserstrahlwerkzeuge, stehende Klingen oder Räumnadeln verwendet werden.

3. Verfahren nach Anspruch 1 oder 2, **dadurch gekennzeichnet, dass** das Federelement (3) an seinen beiden Enden (3a, 3b) mit dem Kern (17) verbunden bleibt.

4. Verfahren nach einem der Ansprüche 1 bis 3, **dadurch gekennzeichnet, dass** das Federelement (3) mittels eines im Wesentlichen horizontalen Schlitzes (11) und eines im Wesentlichen vertikalen Schlitzes (10) gegenüber dem Kern (17) freigelegt wird.

5. Verfahren nach einem oder mehreren der vorstehenden Ansprüche, **dadurch gekennzeichnet, dass** über die Länge (L) der zweiten Seitenkante (II) eine Mehrzahl von zueinander beabstandeten Federelementen (3) freigelegt wird.

6. Verfahren nach einem oder mehreren der vorstehenden Ansprüche, **dadurch gekennzeichnet, dass** die äußere Kante (3c) des Federelementes (3) in einem Winkel (a) zur Oberseite (18) abgeschrägt wird.

## Claims

1. Method for producing a panel, in particular a
floor panel (1, 2), having a core made of wooden material or wooden material-plastic mixture (17),
an upper side (18) and a lower side (19), which, on at least two mutually opposite first and second side edges (I, II), has a mutually corresponding profile such that two identically formed panels (1, 2) can be connected and locked to each other in a horizontal (H) and vertical (V) direction by a substantially vertical joining movement, it being possible for the locking in the vertical direction (V) to be effected by at least one tongue element (3) that is formed in one piece from the core (17) on the second side edge (II), can be moved in the horizontal direction (H) and during the joining movement, snaps in behind a locking edge (4) extending substantially in the horizontal direction (H), in that the at least one tongue element (3) is exposed with respect to the core (17) in the direction of the upper side (18) and in the direction of the first side edge (I) located opposite the said tongue element by means of tools that can be displaced transversely with respect to the processing direction and, in the longitudinal direction of the second side edge (II), remains connected to the core (17) at at least one of its two ends (3a, 3b).

2. Method according to Claim 1, **characterized in that** the tools used are milling, laser-beam or water-jet tools, stationary blades or broaching tools.

3. Method according to Claim 1 or 2, **characterized in that** the tongue element (3) remains connected to the core (17) at both its ends (3a, 3b).

4. Method according to one of Claims 1 to 3, **characterized in that** the tongue element (3) is exposed with respect to the core (17) by means of a substantially horizontal slot (11) and a substantially vertical slot (10).

5. Method according to one or more of the preceding claims, **characterized in that** a plurality of mutually spaced tongue elements (3) are exposed over the length (L) of the second side edge (II).

6. Method according to one or more of the preceding claims, **characterized in that** the outer edge (3c) of the tongue element (3) is chamfered off at an angle (α) towards the upper side (18).

## Revendications

1. Procédéde fabrication d'un panneau, notamment d'un panneau de sol (1, 2), comprenant une âme constituée d'un matériau à base de bois ou d'un mélange de bois et de plastique (17), une face supérieure (18) et uneface inférieure (19), qui présenteun profilage mutuellement correspondantsur au moins deux bords latéraux (I, II) opposés, un premier et un second, tel quedeux panneaux de forme identique peuvent êtrereliés et verrouillés l'un à l'autreen direction horizontale (H) et verticale (V) par un mouvement d'assemblage sensiblement vertical, où le verrouillage en direction verticale (V)peut être effectué par au moins un élément faisant ressort (3) mobile en direction horizontale (H), formé d'un seul tenant avec l'âme (17) sur le deuxième bord latéral (II), etqui lors du mouvement d'assemblages'enclenche sous un bord de verrouillage(4) s'étendant dans une direction sensiblement horizontale (H), par le moyen que ledit au moins un élément faisant ressort (3)est, en direction de la face supérieure (18) et en direction du premier bord latéral (I) qui fait face à ce dernier,détachéde l'âme (17) au moyen d'outilsse déplaçant transversalement à la direction d'usinage, mais reste relié à au moins une de ses deux extrémités (3a, 3b) avec l'âme (17) dans la direction longitudinale du deuxième bord latéral (II).

2. Procédéselon la revendication 1, **caractérisé en ce que** des outils à jet d'eau, à fraiser ou à laser, des lames fixes ou des broches sont utilisés comme outils.

3. Procédéselon la revendication 1 ou 2, caractérisé en ce quel'élément faisant ressort (3) reste relié au niveau de ses deux extrémités (3a, 3b) avecl'âme (17).

4. Procédéselon l'une des revendications 1 à 3, **caractérisé en ce que** l'élément faisant ressort (3) est libéréde l'âme (17) au moyen d'une fente (11) sensiblement horizontale et une fente (10) sensiblement verticale.

5. Procédéselon l'une ou plusieurs des revendicationsprécédentes, **caractérisé en ce qu'**au-delà d'une longueur (L) du deuxième bord latéral (II) une pluralité d'éléments faisant ressort (3) espacés les uns des autres est détachée.

6. Procédé selon l'une ou plusieurs des revendicationsprécédentes, **caractérisé en ce que** le bord extérieur (3c) de l'élément faisant ressort (3) est biseauté d'un angle (a) par rapport àla face supérieure (18).
